# EUROPÄISCHE PATENTSCHRIFT

(11) **EP 2 404 337 B1**
(45) Veröffentlichungstag und Bekanntmachung des Hinweises auf die Patenterteilung: **21.08.2013**
(21) Anmeldenummer: 10706160.8
(22) Anmeldetag: 26.02.2010
(51) Int. Cl.: H01M 2/02, H01M 2/20, H01M 2/22, H01M 2/30, H01M 2/34, H01G 11/82, H01G 11/76

(54) **SPEICHERELEMENT FÜR ELEKTROENERGIE UND VERFAHREN ZUR HERSTELLUNG EINES SPEICHERBLOCKS**
STORAGE ELEMENT FOR ELECTRIC ENERGY AND METHOD FOR PRODUCING A STORAGE BLOCK
ÉLÉMENT ACCUMULATEUR POUR ÉNERGIE ÉLECTRIQUE ET PROCÉDÉ DE FABRICATION D'UN BLOC ACCUMULATEUR

(30) Priorität: 03.03.2009 DE 102009011523
(43) Veröffentlichungstag der Anmeldung: 11.01.2012
(73) Patentinhaber: Li-Tec Battery GmbH, 01917 Kamenz (DE)
(72) Erfinder: HOFMANN, Jürgen, 01917 Kamenz (DE); HOHENTHANNER, Claus-Rupert, 63457 Hanau (DE); SCHMIDT, Torsten, 06188 Landsberg (DE)
(74) Vertreter: Wallinger, Michael
(86) Internationale Anmeldenummer: PCT/EP2010/001217
(87) Internationale Veröffentlichungsnummer: WO 2010/099905

(56) Entgegenhaltungen:
- EP-A1- 0 840 383
- EP-A2- 1 530 247
- WO-A2-2007/004087
- WO-A2-2010/081704
- US-B1- 6 291 970

## Beschreibung

Die Erfindung betrifft ein Speicherelement für Elektroenergie und ein Verfahren zur Herstellung eines Speicherblocks aus solchen Speicherelementen.

Speicherelemente für Elektroenergie werden in vielen Bereichen der Technik in den unterschiedlichsten Formen eingesetzt. Wichtige Beispiele solcher Speicherelemente sind zum einen Kondensatoren und zum anderen galvanische Zellen.

Bei manchen Anwendungen, beispielsweise bei Solaruhren und ähnlichen Produkten, werden Kondensatoren als Speicherelemente bevorzugt. Für andere Anwendungen, beispielsweise für portable Kleingeräte wie Mobiltelefone oder Notebook-Computer und ähnliche Produkte, sind Speicherelemente vorteilhafter, die auf dem Prinzip der galvanischen Zelle beruhen.

Die erwähnten wie grundsätzlich alle Typen von Speicherelementen für Elektroenergie können entweder unmittelbar mit einem Energieverbraucher verbunden werden oder mit anderen - in der Regel gleichartigen - Speicherelementen zu sogenannten Speicherblöcken (Batterien) zusammengeschaltet werden. Bei einer Parallelschaltung von Speicherelementen, bei der Elektroden gleicher Polarität miteinander verbunden werden, erhöht sich durch die Zusammenschaltung das Speichervermögen (die Kapazität) des Speicherblocks. Die Spannung zwischen den zusammen geschalteten Elektroden bleibt bei der Parallelschaltung unverändert.

Bei einer Reihenschaltung, bei der Elektroden verschiedener Polarität miteinander kettenförmig verbunden werden, erhöht sich die Spannung zwischen den freien Elektroden des Speicherblocks. Je nach den Anforderungen der jeweiligen Anwendung sind deshalb Parallelschaltungen oder auch Reihenschaltungen von Speicherelementen zu Speicherblöcken aber auch der unmittelbare Anschluss eines Speicherelements an einen Eriergieverbraucher üblich.

Bei allen Formen der Anwendung solcher Speicherelemente gilt es stets, versehentliche Verpolungen der Elektroden zu vermeiden. Dieses Problem tritt auf, weil die Elektroden, die auch als Ableiter oder Ableiterbleche bezeichnet werden, häufig als einfache Bleche ausgeführt sind, die häufig einfach aus einer meist folienartigen Verpackung des Speicherelements oder des Speicherblocks herausragen, um über form-, kraft- oder stoffschlüssig an diese Ableiterbleche angebundene Kontaktelemente an den Energieverbraucher oder (beim Ladevorgang) an eine Energiequelle angeschossen oder (beim Aufbau eines Speicherblocks) mit Ableitern anderer Speicherelemente elektrisch verbunden zu werden.

Kommt es zu solchen Verpolungen, also zu bestimmungswidrigen elektrischen Verbindungen zwischen den Ableitern von Speicherelementen oder zwischen Ableitern und Anschlusselementen von Energieverbrauchern oder Energiequellen, dann sind Schäden an den Anwendungssystemen oder an den Speicherelementen durch Überspannungen oder Kurzschlussströme typische Folgen solcher Fehler.

Die nachveröffentlichte WO 2010/081704 A2 zeigt Ausführungsbeispiele von Zellblöcken, bei denen die zwei elektrischen Ableiterbleche entgegengesetzter elektrischer Polarität mit jeweils zwei Kodierbohrungen versehen sind, die aber unterschiedliche Abstände zueinander aufweisen. In diese Kodierbohrungen greifen entsprechende Kodierstifte an Kontaktierungs- oder Isolationsriegeln, um eine Verpolungsschutzeinrichtung zu bilden.

Die EP 1 530 247 A2 offenbart eine Batterie mit einem Zellstapel aus mehreren unterschiedlichen Speicherzellen mit unterschiedlichen Bohrungen und Noppen zur Kodierung der Polarität ihrer Ableiterbleche, welche direkt ineinander greifen.

Der vorliegenden Erfindung liegt nun die Aufgabe zugrunde, eine technische Lehre zur Vermeidung von Verpolungen anzugeben. Diese Aufgabe wird erfindungsgemäß durch eine flache Pouch- oder Coffebag-Zelle bzw. durch ein Verfahren zur Herstellung eines Speicherblocks aus solchen Speicherelementen nach einem der unabhängigen Patentansprüche gelöst.

Vorteilhafte Weiterbildungen der Erfindung bilden den Gegenstand von Unteransprüchen.

Gemäß der vorliegenden Erfindung ist ein Speicherelement für Elektroenergie mit mindestens zwei elektrischen Ableitern entgegengesetzter elektrischer Polarität zur Ableitung der in dem Speicherelement gespeicherten Energie vorgesehen, bei dem die Anordnung oder Formgestaltung mindestens eines der Ableiter besondere Anordnungs- oder Formgestaltungselemente aufweist. Diese besonderen Anordnungs- oder Formgestaltungselemente wirken beim Zusammenbau erfindungsgemäßer Speicherelemente mit anderen gleichartigen Speicherelementen zu einem Speicherblock oder beim Anschluss eines solchen Speicherelements oder eines aus solchen Speicherelementen zusammengesetzten Speicherblocks an einen mit entsprechenden Kontakt- oder Isolationselementen ausgestatteten Energieverbraucher oder Energieversorger einer Verpolung des Speicherelements oder der Speicherelemente entgegen.

Unter den Begriffen Anordnungselemente bzw. Formgestaltungselemente soll im Zusammenhang mit den vorliegenden Ausführungen jede denkbare Art von Größe, Position und Gabelung des Ableiterbleches verstanden werden. Eine Verwendung dieser Begriffe im Plural soll nicht notwendigerweise bedeuten, dass in jeder Ausführungsform der vorliegenden Erfindung eine Mehrzahl solcher Elemente verwendet werden muss. Die Verwendung einer Mehrzahl solcher Elemente soll jedoch auch in keinem Fall ausgeschlossen sein.

Bei einer bevorzugten Ausführungsform eines solchen Speicherelements unterstützt die Anordnung oder die Formgestaltung mindestens eines seiner Ableiter - allein oder im Zusammenwirken mit entsprechenden Kontakt- oder Isolationselementen - den Zusammenbau des Speicherelements mit anderen gleichartigen Speicherelementen zu einem Speicherblock.

Besonders bevorzugt wird ferner ein Speicherelement mit mindestens einem Ableiter, dessen besondere Anordnungs- oder Formgestaltungselemente geometrischen Mustern entsprechen, die einer Kodierung der Polarität dieses Ableiters entsprechen.

Insbesondere für den Aufbau von Speicherblöcken wird ein Speicherelement mit mindestens einem Ableiter besonders bevorzugt, der so ausgestaltet ist, dass er mit Ableitern anderer gleichartiger Speicherelemente beim Zusammenbau solcher Speicherelemente zu einem Speicherblock über Kontaktelemente elektrisch verbunden oder mit Hilfe von lsolationselementen von diesen elektrisch isoliert werden kann und dessen besondere Anordnungs- oder Formgestaltungselemente bei bestimmungsgemäßem Zusammenbau solcher Speicherelemente in entsprechende Anordnungs- oder Formgestaltungselemente der Kontaktelemente oder der Isolationselemente eingreifen, um einer Verpolung der Speicherelemente entgegenzuwirken.

Weiterhin besonders bevorzugt ist ein Speicherelement mit mindestens einem Ableiter, dessen besondere Anordnungs- oder Formgestaltungselemente derart ausgestaltet sind, dass sie - allein oder im Zusammenwirken mit entsprechenden Kontakt- oder Isolationselementen - einen bestimmungswidrigen Zusammenbau von Speicherelementen verhindern, oder bei einem bestimmungswidrigen Zusammenbau von Speicherelementen eine bestimmungswidrige elektrische Kontaktierung verhindern, oder zumindest bewirken, dass eine auffällige Abweichung der Form des zusammengebauten Speicherbocks von seiner bestimmungsgemäßen Form entsteht.

Weitere besondere Vorteile ergeben sich bei einem erfindungsgemäßen Speicherelement mit mindestens einem Ableiter, dessen Anordnung oder besondere Anordnungs- oder Formgestaltungselemente derart ausgestaltet sind, dass sie - allein oder im Zusammenwirken mit entsprechenden Kontaktoder Isolationselementen - beim Zusammenbau von Speicherelementen zu einem Speicherblock eine bestimmungsgemäße Positionierung der Speicherelemente unterstützen oder erzwingen.

Gemäß der vorliegenden Erfindung ist außerdem ein Verfahren zur Herstellung eines Speicherblocks aus einer Mehrzahl von flachen Pouch- oder Coffeebag-Zellen mit jeweils mindestens zwei elektrischen Ableitern entgegengesetzter elektrischer Polarität zur Ableitung der in dem jeweiligen Speicherelement gespeicherten Energie vorgesehen, bei dem die Speicherelemente mit anderen gleichartigen Speicherelementen zu einem Speicherblock zusammengebaut werden, nachdem die Anordnung oder Formgestaltung mindestens eines der Ableiter aller oder wenigstens einiger dieser Speicherelemente vor dem Zusammenbau mit besonderen Anordnungs- oder Formgestaltungselementen ausgestaltet wurde, die beim Zusammenbau solcher Speicherelemente zu einem Speicherblock einer Verpolung der Speicherelemente entgegenwirken.

Besonders bevorzugt ist in diesem Zusammenhang ein Verfahren zur Herstellung eines Speicherblocks, bei dem die bestimmungsgemäße Positionierung der Speicherelemente im Speicherblock beim Zusammenbau durch die Anordnung oder Formgestaltung mindestens eines der Ableiter aller oder wenigstens einiger dieser Speicherelemente unterstützt wird.

Die vorliegende Erfindung wird nachstehend anhand bevorzugter Ausführungsbeispiele und mit Hilfe von Figuren näher beschrieben.

Dabei zeigt
- Fig. 1: ein Beispiel der Außenansicht eines Speicherelements für Elektroenergie gemäß dem Stand der Technik;
- Fig. 2: ein Vergleichs beispiel eines Speicherelements für Elektroenergie;
- Fig. 3: ein Vergleichs beispiel eines Speicherelements für Elektroenergie (Zelle) mit daran anschließenden Kontakt- bzw. Isolationselementen zum Aufbau eines Speicherblocks (Zellenblocks);
- Fig. 4: eine Explosionsdarstellung des in Figur 3 dargestellten Speicherelements für Elektroenergie (Zelle) mit daran anschließenden Kontakt- bzw. Isolationselementen zum Aufbau eines Speicherblocks (Zellenblocks);
- Fig. 5: eine vergrößerte Darstellung eines Ableiters des in Figur 3 dargestellten Speicherelements für Elektroenergie und
- Fig. 6: eine Draufsichtdarstellung eines Vergleichs beispiels eines Speicherelements für Elektroenergie.

Gemäß der vorliegenden Erfindung ist ein Speicherelement (101, 305) für Elektroenergie mit mindestens zwei elektrischen Ableitern (103, 104) entgegengesetzter elektrischer Polarität zur Ableitung der in dem Speicherelement gespeicherten Energie vorgesehen, bei dem die Anordnung oder Formgestaltung mindestens eines der Ableiter (103, 104) besondere Anordnungs- oder Formgestaltungselemente (202, 203) aufweist. Diese besonderen Anordnungs- oder Formgestaltungselemente (202, 203) wirken beim Zusammenbau erfindungsgemäßer Speicherelemente mit anderen gleichartigen Speicherelementen zu einem Speicherblock oder beim Anschluss eines solchen Speicherelements oder eines aus solchen Speicherelementen zusammengesetzten Speicherblocks an einen mit entsprechenden Kontakt- oder Isolationselementen ausgestatteten Energieverbraucher oder Energieversorger einer Verpolung des Speicherelements oder der Speicherelemente entgegen.

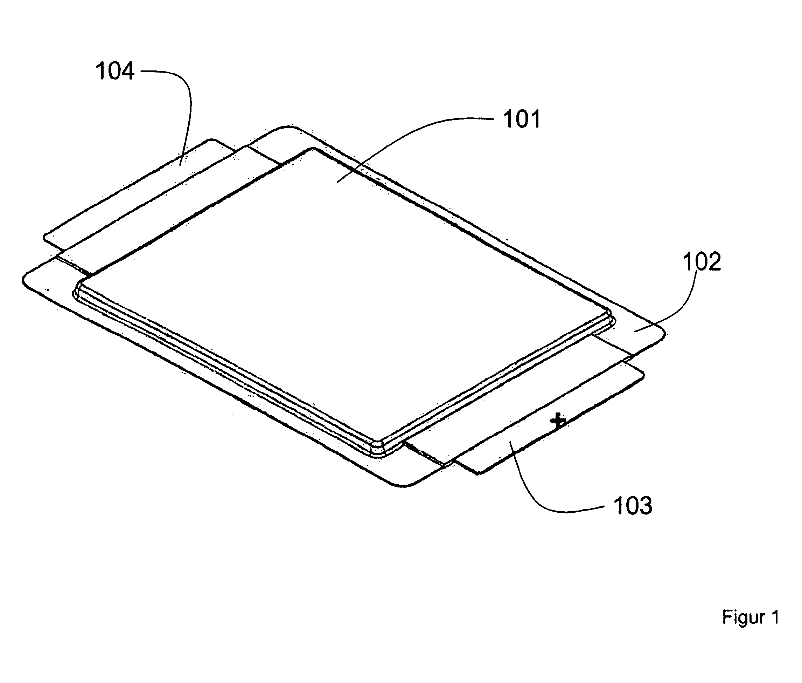

Wie in Figur 1 am Beispiel einer sogenannten Pouch- oder Coffebag-Zelle dargestellt, geht die häufig sehr einfache Ausführung der Ableiterbleche (103, 104) mit einer erheblichen Verwechslungsgefahr einher, die in der Praxis häufig zu Verpolungen der Speicherelemente, also zu bestimmungswidrigen elektrischen Verbindungen zwischen deren Ableitern oder zwischen den Ableitern und an diese angeschlossenen elektrischen Kontakten führt. Solche Speicherelemente sind häufig elektrochemische (galvanische) Zellen, deren elektrochemisch wirksamer Inhalt häufig von einer folienartigen Verpackung (102) umgeben ist, durch welche die elektrischen Anschlüsse (die auch als Ableiter, Elektroden, oder ähnlich bezeichnet werden) hindurchgeführt sind.

Die vorliegende Erfindung lässt sich jedoch auch im Zusammenhang mit anderen Speicherelementen, z.B. mit Kondensatoren, verwirklichen, und die vorliegenden Ausführungen gelten deshalb sinngemäß für alle Typen von elektrischen Speicherelementen und aus solchen Speicherelementen hergestellten Speicherblöcke. Die elektrische Spannung wird an diesen Ableitern häufig durch form-, kraft- oder stoffschlüssig an die Ableiterbleche angebundene Kontaktelemente abgegriffen. Diese können ein- oder beidseitig an die Ableiter anschließen.

Häufig befindet sich auf der einen Seite eines Ableiters ein Kontaktelement und auf der anderen Seite ein Isolationselement oder ein Halteelement. Solche Halteelemente können dazu dienen, ein Kontaktelement gegen einen Ableiter zu pressen, oder das Speicherelement oder den Speicherblock in anderer Weise innerhalb der Anwendung stabil zu platzieren. Solche Halteelemente werden dabei häufig Isolationselemente sein, es sein denn, ein Ableiter soll beispielsweise das elektrische Potential eines Gerätegehäuses führen.

Die Kontaktelemente sind bei der Anwendung von Einzelzellen direkt oder indirekt mit den elektrischen Stromverbrauchern oder Stromquellen verbunden. Bei Speicherblöcken (Batterien, Zellblöcken, etc.) dienen Kontakt- und Isolationselemente dem Aufbau einer Parallel- oder Reihenschaltung von Speicherelementen innerhalb des Speicherblocks, je nach den Erfordernissen der Anwendung.

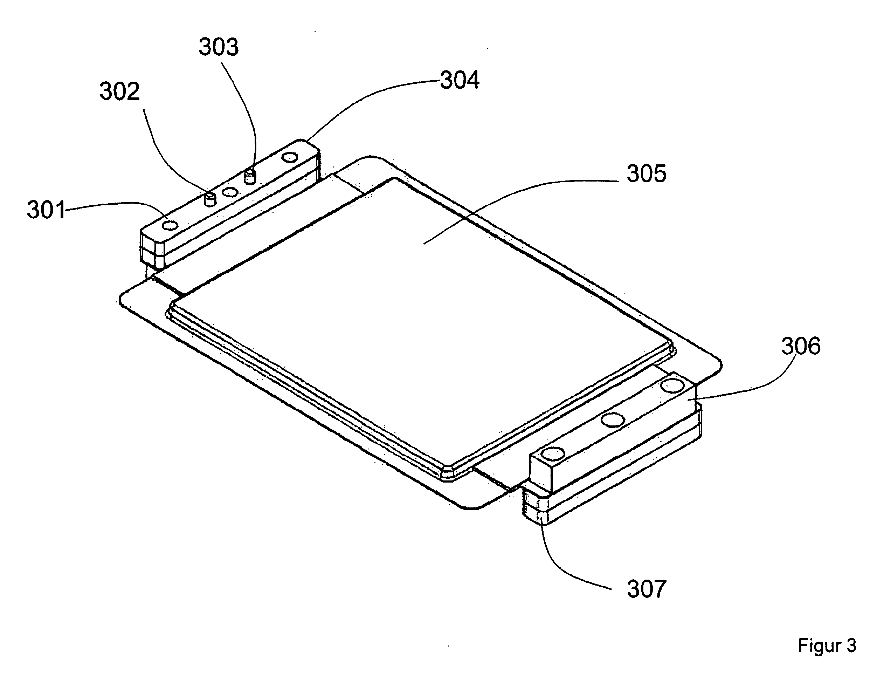

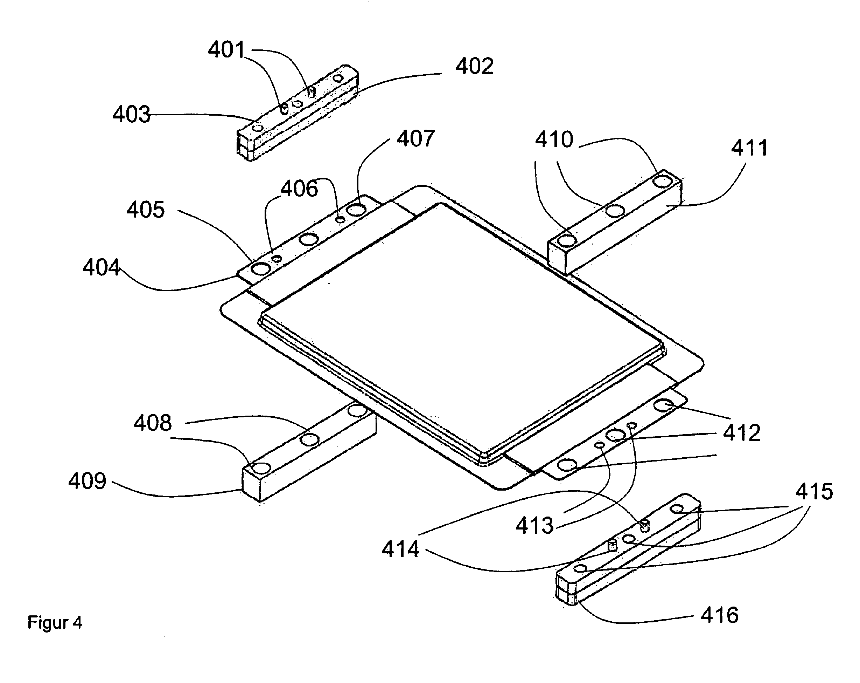

Anhand der Figuren 3 und 4 ist leicht zu sehen, wie eine zweckmäßige Kombination von Kontakt- und Isolationselementen (304, 306, 307) in geeigneter Verbindung mit den Ableitern eines Speicherelements (305) für den einfachen Aufbau eines Speicherblocks in Parallel- oder Reihenschaltung von Speicherelementen genutzt werden kann.

Soll etwa durch Stapeln einer Mehrzahl von in den Figuren 3 und 4 dargestellten Aggregaten aus einem Speicherelement (305) und Kontakt- und Isolationselementen (304, 306, 307) beispielsweise eine Reihenschaltung von Speicherelementen aufgebaut werden, so werden dazu beispielsweise elektrisch leitende Kontaktelemente (304) auf die Oberseiten der negativen Ableiter (Kathoden) aufgebracht, und die Oberseiten der positiven Ableiter (Anoden) mit Isolationselementen (306) belegt.

Wenn nun, wie in diesem Beispiel vorgesehen, der Abstand und die Größe der auf den Kontakt- oder Isolationselementen (304, 402, 416) angebrachten Noppen (401, 414) zum Abstand und zur Größe der in den Ableitern vorgesehenen Bohrungen (406, 413) passen, dann wirken diese Maßnahmen einer bestimmungswidrigen elektrischen Kontaktierung entgegen, weil eine versehentliche bestimmungswidrige Ausrichtung eines Speicherelements beim Zusammenbau des Speicherblocks erschwert oder gar verhindert würde oder zumindest sofort auffiele.

Diese Konstruktion bewirkt also, dass beim Aufbau von Speicherblöcken in Reihenschaltung nur Ableiter ungleichnamiger Polarität miteinander verbunden werden können. Entsprechendes gilt für den Aufbau von Speicherblöcken in Parallelschaltung, bei der es gerade darauf ankommt, dafür zu sorgen, dass nur Ableiter gleichnamiger Polarität miteinander verbunden werden.

Entsprechendes gilt auch für Ausführungsformen der Erfindung, bei denen anstelle von Noppen und Bohrungen oder anstelle eines geometrischen Musters oder einer Anordnung von solchen Noppen oder Bohrungen eine andersartige Anordnung oder Formgestaltung mindestens eines der Ableiter (103, 104) oder der Kontakt- oder Isolationselemente oder andersartige Kombinationen von Anordnungen oder Formgestaltungen solcher Ableiter oder Kontakt- oder Isolationselemente mit andersartigen besonderen Anordnungs- oder Formgestaltungselementen (201, 202, 203, 204) zum Einsatz kommen können, die beim Zusammenbau solcher Speicherelemente mit anderen, insbesondere gleichartigen, Speicherelementen zu einem Speicherblock oder beim Anschluss des Speicherelements oder eines Speicherblocks aus solchen Speicherelementen an einen mit entsprechenden Kontakt- oder Isolationselementen ausgestatteten Energieverbraucher oder Energieversorger einer Verpolung der galvanischen Zelle oder Zellen entgegenwirken.

Ein wichtiger Gedanke der vorliegenden Erfindung besteht - mit anderen Worten formuliert - darin, die Ableiter, die daran anschließenden Kontaktelemente und/oder die daran anschließenden Isolations- oder Halteelemente mit einer "geometrischen Kodierung" zu versehen, die einer Verpolung der Zellen entgegenwirkt oder diese gar ausschließt. Wird eine erfindungsgemäße Zelle seitenverkehrt (also bestimmungs-widrig) eingebaut, dann verhindern die die elektrische Polarität der Elektroden "in geometrischer Weise" - also mit Hilfe ihrer besonderen Anordnungs- oder Formgestaltungselemente - kodierenden Eigenschaften der erfindungsgemäßen Ableiter, Kontakt-, Isolations- oder Haltelemente entweder den elektrischen Kontakt und/oder den Zusammenbau oder Einbau der Speicherelemente oder signalisieren beispielsweise durch außermittige oder versetzte Anordnung des Speicherelements im Speicherblock dem Monteur eindeutig und augenfällig den Fehler.

Die Elemente zur geometrischen Kodierung der elektrischen Polarität, also die Anordnung oder Formgestaltung der Ableiter (103, 104), deren besondere Anordnungs- oder Formgestaltungselemente (201, 202, 203, 204, 301, 302, 303, 404, 405, 406, 407, 412, 413) oder die entsprechenden Anordnungs- oder Formgestaltungselemente (401, 403, 408, 410, 414, 415) der mit den Ableitern zu verwendenden Kontakt-, Isolations- oder Halteelemente, können dabei - je nach Ausführungsform der Erfindung - beispielsweise die Größe, die Form oder die besondere Anordnung eines Ableiters (Position an der Zelle) der seine spezielle Formgestaltung selbst (Gabellung) sein, die nur bei lagerichtiger Anordnung des Speicherelements in Bezug auf entsprechende Gegenstücke, wie beispielsweise entsprechende Kontakt- oder Isolationselemente, in die entsprechenden Anordnungs- und Formelemente dieser Gegenstücke bestimmungsgemäß eingreifen.

Besonders vorteilhaft wirkt sich die Erfindung aus, wenn die erfindungsgemäße Kodierung der Ableiter bereits vor dem Abschluss des Fertigungsprozesses des Speicherelements vorgenommen wird, weil mit dieser Maßnahme einer Verpolung des Speicherelements im weiteren Fertigungsprozess entgegengewirkt werden kann. Wo dies nicht möglich ist, empfiehlt sich eine Kodierung der Ableiter ursprünglich nicht mit kodierten Ableitern versehener Speicherelemente vor dem Zusammenbau von Speicherblöcken, um einer Verpolung beim Zusammenbau entgegenzuwirken.

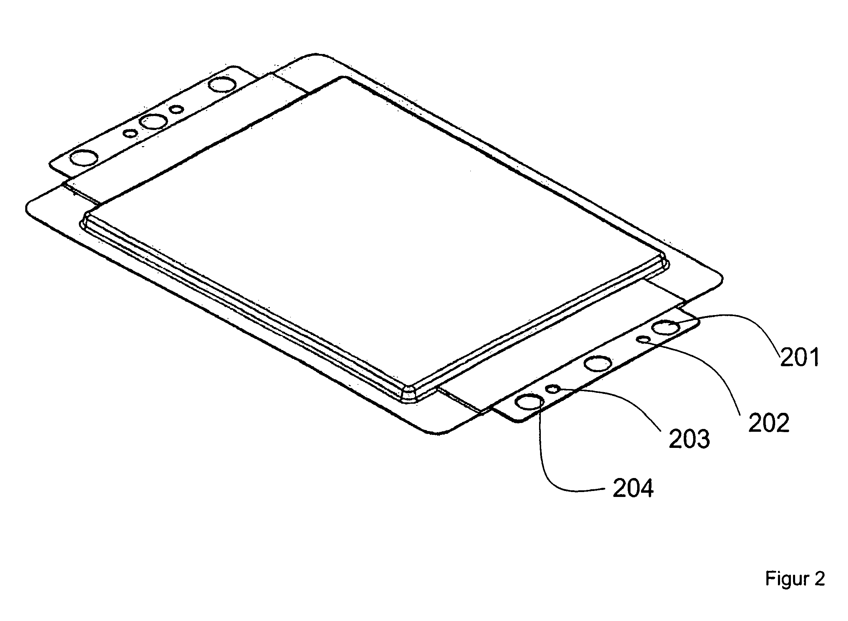

Wie in den Figuren 2, 3, 4, 5 und 6 am Beispiel einer flachen Pouch-Zelle dargestellt, kann ein Vervolungsschutz als Vergleichsbeispiel schon mit einfachen Lochmustern (202, 203) bzw. (406, 413) verwirklicht werden, die je nach Anwendungsfall und Ausführungsform der Erfindung mit entsprechenden Lochmustern und/oder Noppenmustern (301, 302, 303, 401, 403, 408, 410, 412, 414, 415) in entsprechenden Kontakt- oder lsolationselementen (304, 306, 307, 402, 409, 411, 416) zusammenpassen.

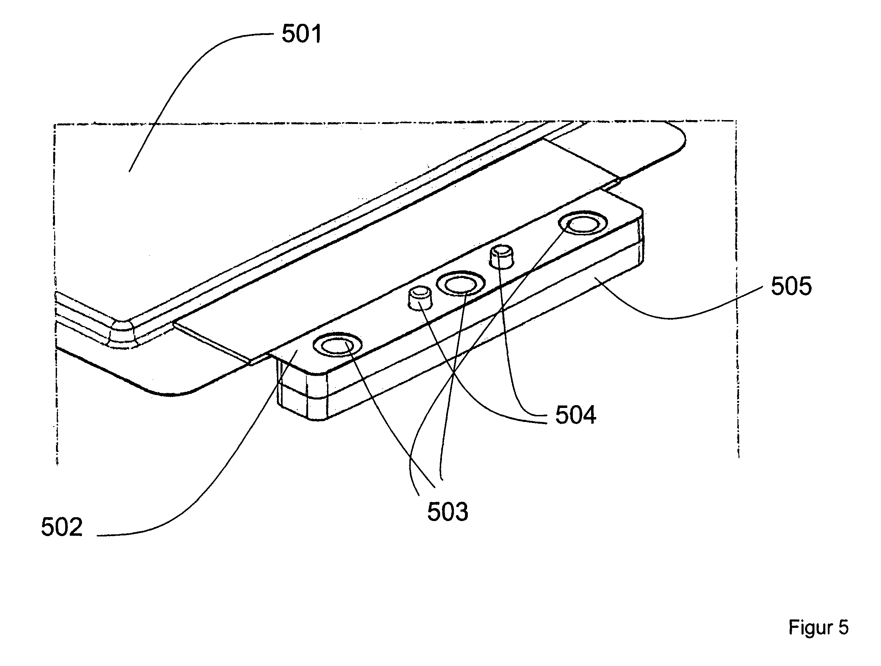

Im Detail zeigt Figur 5, wie die Noppen (504) bzw. die Bohrungen (503) eines Kontakt- oder Isolationselements (505) zu den entsprechenden Bohrungen des mit einem solchen Element nur mechanisch oder auch elektrisch verbundenen Ableiters (502) eines Speicherelements (501) passen.

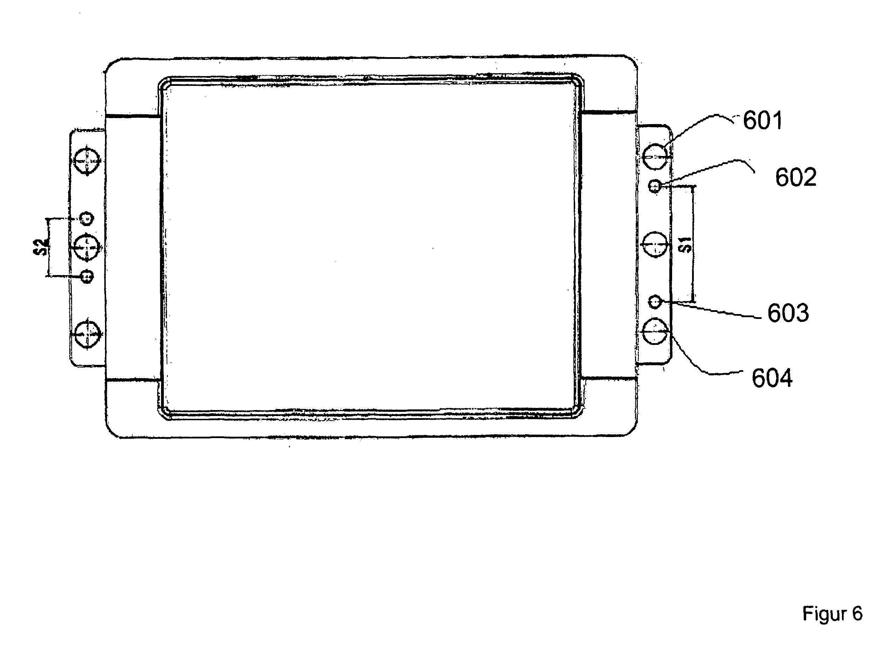

In Draufsicht zeigt Figur 6, wie durch einfache Wahl unterschiedlicher Abstände (S1, S2) von kodierenden Bohrungen (602, 603) einer Verpolung entgegengewirkt werden kann. Diese kodierenden Bohrungen können, wie es auch Figur 4 zeigt, bei Bedarf leicht zusätzlich zu eventuell bereits vorhandenen kodierenden oder nicht kodierenden, je nach Ausführungsform der Erfindung gegebenenfalls lediglich dem stabilen Einbau dienenden weiteren Bohrungen (405, 407, 410, 412, 601, 604) im Ableiter angebracht werden.

Bei geeigneter Ausführung der Anordnungs- oder Formgestaltungselemente der Ableiter und/oder der Kontakt- oder Isolationselemente ergibt sich der zusätzliche Vorteil, dass ein erfindungsgemäßes Speicherelement durch seine Formgestaltung oder Anordnung, oder durch die Anordnung oder durch die Formgestaltung mindestens eines seiner Ableiter (103, 104, 502) - allein oder im Zusammenwirken mit entsprechenden Kontakt- oder Isolationselementen (402, 409, 411, 416) - den Zusammenbau des Speicherelements mit anderen gleichartigen Speicherelementen zu einem Speicherblock unterstützt. Dies ist beispielsweise der Fall, wenn die Form der Pouch- oder Coffebag-Zellen eine Stapelung zu einem Speicherblock unterstützt, oder wenn die Anordnung oder die Formgestaltung der Ableiter (103, 104, 502) oder der entsprechenden Kontakt- oder Isolationselemente (402, 409, 411, 416) eine Stapelung zu einem Speicherblock unterstützt, wie dies bei den in den Figuren 3 und 4 gezeigten Beispielen dargestellt ist.

I In diesem Vergleichs beispiel unterstützen die zueinander passenden Anordnungen und Dimensionierungen von Noppen und Bohrungen sogar eine bestimmungsgemäße Positionierung der Speicherelemente bei deren Zusammenbau zu einem Speicherblock, denn ein bestimmungsgemäßes Ineinandergreifen dieser Anordnungs- und Formgestaltungselemente setzt eine bestimmungsgemäße Positionierung der Speicherelemente zwingend voraus.

## Patentansprüche

1. Flache Pouch- oder Coffeebag-Zelle (101, 305, 501) mit mindestens zwei elektrischen Ableiterblechen (103, 104, 502) entgegengesetzter elektrischer Polarität zur Ableitung der in der Zelle gespeicherten Energie,
**dadurch gekennzeichnet, dass**
mindestens eines der Ableiterbleche (103, 104, 502) Anordnungs- oder Formgestaltungselemente zur geometrischen Kodierung der Polarität des jeweiligen Ableiterbleches aufweist, die ausgewählt sind aus Größe, Position und Gabelungen des Ableiterbleches und mit entsprechenden Anordnungs- oder Formgestaltungselementen an/in Kontakt-, Isolations- oder Halteelementen (304, 306, 307, 402, 416, 505) zusammenpassen, sodass die Anordnungs- oder Formgestaltungselemente der Ableiterbleche (103, 104, 502)
a) beim Zusammenbau solcher Zellen (101, 305, 501) über die Kontakt-, Isolations- oder Halteelemente (304, 306, 307, 402, 416, 505) mit anderen gleichartigen Zellen zu einem Speicherblock oder
b) beim Anschluss der Zelle (101, 305, 501) oder eines Speicherblocks aus solchen Zellen an einen mit den Kontakt-, Isolations- oder Halteelementen (304, 306, 307, 402, 416, 505) ausgestatteten Energieverbraucher oder Energieversorger
im Zusammenwirken mit den Kontakt-, Isolations- oder Halteelementen (304, 306, 307, 402, 416, 505) einer Verpolung der Zelle (101, 305, 501) oder des Speicherblocks entgegenwirken.

2. Zelle nach Anspruch 1, bei welcher Abstand und Größe der Anordnungs- oder Formgestaltungselemente der Ableiterbleche (103, 104, 502) zu Abstand und Größe der Anordnungs- oder Formgestaltungselementen der Kontakt-, Isolations- oder Halteelemente (304, 306, 307, 402, 416, 505) passen.

3. Verfahren zur Herstellung eines Speicherblocks aus einer Mehrzahl von flachen Pouch- oder Coffeebag-Zellen (101, 305, 501) mit jeweils mindestens zwei elektrischen Ableiterblechen (103, 104, 502) entgegengesetzter elektrischer Polarität zur Ableitung der in der jeweiligen Zelle gespeicherten Energie, insbesondere von flachen Pouch- oder Coffebag-Zellen nach einem der vorhergehenden Ansprüche,
**dadurch gekennzeichnet, dass**
a) die Zellen (101, 305, 501) über Kontakt-, Isolations- oder Halteelemente (304, 306, 307, 402, 416, 505) mit anderen gleichartigen Zellen zu einem Speicherblock zusammengebaut werden, nachdem
b) mindestens eines der Ableiterbleche (103, 104, 502) aller oder wenigstens einiger dieser Zellen vor dem Zusammenbau mit Anordnungs- oder Formgestaltungselementen zu geometrischen Kodierung der Polarität des jeweiligen Ableiterbleches ausgestaltet wurde, die ausgewählt sind aus Größe, Position und Gabelungen des Ableiterbleches und mit entsprechenden Anordnungs- oder Formgestaltungselementen an/in den Kontakt-, Isolations- oder Halteelementen (304, 306, 307, 402, 416, 505) zusammenpassen, sodass die Anordnungs- oder Formgestaltungselemente der Ableiterbleche (103, 104, 502) beim Zusammenbau solcher Zellen (101, 305, 501) zu einem Speicherblock im Zusammenwirken mit den Kontakt-, Isolations- oder Halteelementen (304, 306, 307, 402, 416, 505) einer Verpolung der Zellen (101, 305, 501) entgegenwirken.

4. Verfahren nach Anspruch 3, bei welchem die Anordnungs- oder Formgestaltungselemente der Ableiterbleche (103,104,502) vor Abschluss des Fertigungsprozesses der Zellen an diesen ausgebildet werden.

## Claims

1. A flat pouch or coffee bag cell (101, 305, 501) having at least two electric collector plates (103, 104, 502) of opposing electrical polarity for collecting the energy stored in the cell,
**characterized in that**
at least one of the collector plates (103, 104, 502) comprises assembly or design elements for geometrically coding the polarity of the respective collector plate which are selected from size, position and forking of the collector plate and match corresponding assembly or design elements on/in contact, insulation or retaining elements (304, 306, 307, 402, 416, 505) such that the assembly or design elements of the collector plate (103, 104, 502)
a) upon assembling of such cells (101, 305, 501) with other similar cells by means of the contact, insulation or retaining elements (304, 306, 307, 402, 416, 505) to form a storage block or
b) upon connecting of the cell (101, 305, 501) or a storage block comprised of such cells to an energy load or supplier equipped with said contact, insulation or retaining elements (304,306,307,402,416,505)
interact with the contact, insulation or retaining elements (304, 306, 307, 402, 416, 505) to counteract a polarity reversal of the cell (101, 305, 501) or storage block.

2. The cell according to claim 1, wherein the spacing and size of the assembly or design elements of the collector plate (103, 104, 502) match the spacing and size of the assembly or design elements of the contact, insulation or retaining elements (304, 306, 307, 402, 416, 505).

3. A method of manufacturing a storage block comprised of a plurality of flat pouch or coffee bag cells (101, 305, 501) each having at least two electric collector plates (103, 104, 502) of opposing electrical polarity for collecting the energy stored in the respective cell, particularly flat pouch or coffee bag cells in accordance with one of the preceding claims,
**characterized in that**
a) the cells (101, 305, 501) are assembled together with other similar cells by means of contact, insulation or retaining elements (304, 306, 307, 402, 416, 505) to form a storage block, after
b) prior to assembly, at least one of the collector plates (103, 104, 502) of all or at least some of said cells have been equipped with assembly or design elements for geometrically coding the polarity of the respective collector plate which are selected from the size, position and forking of the collector plate and match corresponding assembly or design elements on/in the contact, insulation or retaining elements (304, 306, 307, 402, 416, 505) such that the assembly or design elements of the collector plate (103, 104, 502) interact with said contact, insulation or retaining elements (304, 306, 307, 402, 416, 505) to counteract a polarity reversal of the cells (101, 305, 501) or storage block upon the assembly of such cells (101, 305, 501) into a storage block.

4. The method according to claim 3, wherein the assembly or design elements of the collector plate (103, 104, 502) are formed on the cells prior to the completion of the manufacturing process of the cells.

## Revendications

1. Cellule plate en forme de sachet ou de dosette à café (101, 305, 501) avec au moins deux plaques de délivrance électrique (103, 104, 502) de polarités électriques opposées pour la délivrance de l'énergie accumulée dans la cellule,
**caractérisée en ce que**
au moins une des plaques de délivrance (103, 104, 502) présente des éléments d'agencement ou de configuration de forme pour le codage géométrique de la polarité de chaque plaque de délivrance, lesquels sont choisis entre la grandeur, la position et les embranchements de la plaque de délivrance, et qui sont ajustés à des éléments d'agencement ou de configuration de forme correspondants sur/dans des éléments de contact, d'isolation ou de maintien (304, 306, 307, 402, 416, 505), si bien que les éléments d'agencement ou de configuration de forme des plaques de délivrance (103, 104, 502)
s'opposent à une inversion de polarité de la cellule (101, 305, 501) ou, en coopération avec les éléments de contact, d'isolation ou de maintien (304, 306, 307, 402, 416, 505),
a) lors de l'assemblage de telles cellules (101, 305, 501) avec d'autres cellules similaires pour former un bloc accumulateur au moyen des éléments de contact, d'isolation ou de maintien (304, 306, 307, 402, 416, 505), ou
b) lors de la connexion de la cellule (101, 305, 501) ou d'un bloc accumulateur constitué de telles cellules à un récepteur d'énergie ou un distributeur d'énergie équipé des éléments de contact, d'isolation ou de maintien (304, 306, 307, 402, 416, 505).

2. Cellule selon la revendication 1, où l'espacement et la grandeur des éléments d'agencement ou de configuration de forme des plaques de délivrance (103, 104, 502) sont ajustés à l'espacement et à la grandeur des éléments d'agencement ou de configuration de forme des éléments de contact, d'isolation ou de maintien (304, 306, 307, 402, 416, 505).

3. Procédé de fabrication d'un bloc accumulateur constitué d'une pluralité de cellules plates en forme de sachet ou de dosette à café (101, 305, 501) avec au moins deux plaques de délivrance électrique (103, 104, 502) chacune, de polarités électriques opposées pour la délivrance de l'énergie accumulée dans les cellules respectives, en particulier des cellules plates en forme de sachet ou de dosette à café selon l'une des revendications précédentes,
**caractérisé en ce que**
a) les cellules (101, 305, 501) sont assemblées à d'autres cellules similaires au moyen d'éléments de contact, d'isolation ou de maintien (304, 306, 307, 402, 416, 505) pour former un bloc accumulateur, après
b) qu'au moins une des plaques de délivrance (103, 104, 502) de toutes les cellules, ou d'au moins quelques-unes desdites cellules a été équipée avant l'assemblage d'éléments d'agencement ou de configuration de forme pour le codage géométrique de la polarité de chaque plaque de délivrance, lesquels sont choisis entre la grandeur, la position et les embranchements de la plaque de délivrance, et sont ajustés à des éléments d'agencement ou de configuration de forme correspondants sur/dans les éléments de contact, d'isolation ou de maintien (304, 306, 307, 402, 416, 505), si bien que les éléments d'agencement ou de configuration de forme des plaques de délivrance (103, 104, 502) s'opposent à une inversion de polarité des cellules (101, 305, 501), en coopération avec les éléments de contact, d'isolation ou de maintien (304, 306, 307, 402, 416, 505), lors de l'assemblage de telles cellules (101, 305, 501) en bloc accumulateur.

4. Procédé selon la revendication 3, où les éléments d'agencement ou de configuration de forme des plaques de délivrance (103, 104, 502) sont réalisés sur les cellules avant la fin du processus de fabrication de celles-ci.
